# EUROPEAN PATENT SPECIFICATION

(11) **EP 1 931 745 B1**
(45) Date of publication and mention of the grant of the patent: **12.01.2011**
(21) Application number: 06794679.8
(22) Date of filing: 06.10.2006
(51) Int. Cl.: C09K 8/68, C09K 8/80

(54) **METHODS FOR ENHANCING AQUEOUS FLUID RECOVERY FROM SUBTERRANEAN FORMATIONS**
VERFAHREN ZUR VERBESSERUNG DER GEWINNUNG VON WÄSSRIGEN FLUIDEN AUS UNTERIRDISCHEN FORMATIONEN
PROCEDES D AMELIORATION DE LA RECUPERATION DE FLUIDES AQUEUX A PARTIR DE FORMATIONS SOUTERRAINES

(30) Priority: 06.10.2005 US 244559
(43) Date of publication of application: 18.06.2008
(73) Proprietor: HALLIBURTON ENERGY SERVICES, INC., Duncan, OK 73533 (US)
(72) Inventor: NGUYEN, Philip, D., Duncan, OK 73533 (US); WEAVER, Jimmie, D., Duncan, OK 73533 (US); BOWLES, Bobby, Comanche, OK 73529 (US); SLABAUGH, Billy, F., deceased (US); PARKER, Mark, A., Dundan, OK 73533 (US)
(74) Representative: Curtis, Philip Anthony
(86) International application number: PCT/GB2006/003728
(87) International publication number: WO 2007/039758

(56) References cited:
- WO-A2-2005/100007
- US-A- 4 087 572
- US-B2- 6 660 693
- DATABASE WPI Week 200453 Derwent Publications Ltd., London, GB; AN 2004-550573 XP002409841 & RU 2 230 897 C2 (BOGDANOV V S) 20 June 2004 (2004-06-20)

## Description

### BACKGROUND

The present invention relates to the enhancement of treatment fluid recovery from subterranean formations. More particularly, the present invention relates to improved methods using hydrophobic coating agents to enhance the recovery of aqueous treatment fluids.

Treatment fluids are often used in a variety of subterranean formations. Such treatments include, but are not limited to, drilling operations, stimulation treatments, completion fluids, and sand control treatments. As used herein, the term "treatment," or "treating," refers to any subterranean operation that uses a fluid in conjunction with a desired function and/or for a desired purpose. The term "treatment" or "treating" does not necessarily imply any particular action by the fluid.

Recovery of an aqueous treatment fluid is often desired after the treatment fluid has performed its function. Typically, treatment fluids, such as fracturing fluids, for example, will be recovered by allowing the treatment fluid to flow back from the subterranean formation. Increasing the efficiency and the recovery rate of aqueous treatment fluids, sometimes referred to as load recovery, is often desired. As used herein, the term "load recovery" means the recovery of an aqueous treatment fluid previously-injected into a subterranean formation. Increasing load recovery is often desired, because the continued presence of an aqueous treatment fluid can undesirably reduce hydrocarbon production. That is, an increase in water saturation in the near-well bore area can result in water blocks that may act to impair the production of hydrocarbons. As used herein, the term "water block" refers to the reduction of formation permeability caused by the invasion or saturation of water into the pores causing capillary blocking of pore throats by surface tension and/or clay swelling. Treatment fluids, and more particularly, aqueous treatment fluids that remain in the near well bore area can impede the migration of hydrocarbons into and through the pore spaces of the treated region.

Enhancing the recovery of treatments fluids such as fracturing fluids may also be desirable to allow, in some cases, the possible reuse of the treatment fluid or to avoid excessive mixing of the treatment fluid with produced hydrocarbons.

Although usually no additional action is taken to enhance the load recovery efficiency beyond merely flowing back from the formation, some conventional methods used to increase the recovery of a treatment fluid have included certain chemical treatments such as the use of surfactants to decrease water wetting of the formation. Reducing water wetting of the formation is thought to increase the relative permeability of water in the formation so as to enhance, at least temporarily, the load recovery from the subterranean formation. Other methods have been used to increase load recovery such as enhanced cleanup of propped fractures. Unfortunately, the conventional methods often suffer from high cost and/or low efficiencies.

Despite past advances in load recovery efficiency, further improving load recovery efficiencies may be advantageous. For example, gas production may be enhanced in certain applications by improvement of load recovery by, among other things, improvement in the removal of water blocks.

### SUMMARY

The present invention relates to the enhancement of treatment fluid recovery from subterranean formations. More particularly, the present invention relates to improved methods using hydrophobic coating agents to enhance the recovery of aqueous treatment fluids.

One embodiment of the present invention provides method of enhancing the recovery of an aqueous treatment fluid from a subterranean formation comprising: providing a plurality of hydrophobically-coated particulates; placing the plurality of hydrophobically-coated particulates in the subterranean formation; and allowing a treatment fluid to flow back through the plurality of hydrophobically-coated particulates to recover a treatment fluid that was previously-introduced into the subterranean formation.

The features and advantages of the present invention will be apparent to those skilled in the art. While numerous changes may be made by those skilled in the art, such changes are within the spirit of the invention.

### DESCRIPTION OF PREFERRED EMBODIMENTS

The present invention relates to the enhancement of treatment fluid recovery from subterranean formations. More particularly, the present invention relates to improved methods using hydrophobic coating agents to increase the recovery of aqueous treatment fluids.

Improving the load recovery of treatment fluids is often desirable to enhance the production of hydrocarbons, in part, by the removal of water blocks. The methods and compositions of the present invention allow for an enhanced recovery of treatment fluids from subterranean formations both in terms of rate and efficiency. In preferred embodiments, the methods and compositions of the present invention are especially suited for enhancing the recovery of aqueous fracturing fluids from subterranean formations.

Methods of the present invention may include coating proppant or gravel particulates with a hydrophobic or water-repellent coating. A fracturing carrier fluid may be used to introduce coated particulates into created fractures in the subterranean formation. By introducing coated proppant or coated gravel particulates into the subterranean formation and allowing the treatment fluids-to flow back through the coated particulates, -the recovery of the aqueous treatment fluids may be enhanced.

### I. Hydrophobically-Coated Particulates Used in Conjuction with the Present Invention

### A. Suitable Particulates

The particulates that may be used in the present invention include any proppant or gravel particulates that may be used in a subterranean application (proppant and gravel particulates are referred to herein collectively as "particulates"). Suitable particulates include sand, sintered bauxite, silica alumina, glass beads, etc. Other suitable particulates include, but are not limited to, sand, bauxite, ceramic materials, glass materials, polymer materials, polytetrafluoroethylene materials, nut shell pieces, seed shell pieces, fruit pit pieces, wood, composite particulates, proppant particulates, gravel, and combinations thereof. Suitable composite materials may comprise a binder and a filler material wherein suitable filler materials include silica, alumina, fumed carbon, carbon black, graphite, mica, titanium dioxide, meta-silicate, calcium silicate, kaolin, talc, zirconia, boron, fly ash, hollow glass microspheres, solid glass, and combinations thereof. In certain exemplary embodiments, the particulates may comprise common sand. Suitable particulates may take any shape including, but not limited to, the physical shape of platelets, shavings, flakes, ribbons, rods, strips, spheroids, ellipsoids, toroids, pellets, or tablets. Although a variety of particulate sizes may be useful in the present invention, in certain embodiments, particulate sizes greater than about 100 mesh are preferred, and in still other embodiments, particulate sizes greater than about 40 mesh is preferred.

### B. Hydrophobic Coatings Generally

The hydrophobically-coated particulates used in the methods of the present invention may comprise a plurality of particulates and a hydrophobic coating. Optionally, the hydrophobically-coated particulates may comprise a surfactant.

Particulates of the present invention may be coated with a hydrophobic or water repellant coating. The term "coating" as used herein refers to at least a partial coating of some or all of the particulates. 100% coverage of the particulates is not implied by the term "coating." Hydrophobic coating agents of the present invention may be any chemical agent capable of forming a hydrophobic coating on the surface of particulates so as to enhance the recovery of an aqueous treatment fluid. In certain embodiments, a surfactant may be included in the hydrophobic coating agent so as to improve the coating process as explained further below. Suitable hydrophobic coating agents may include oligomeric materials, monomeric materials, and oil-wetting compounds to provide at least a monomolecular film making the mineral surfaces water-repellent or hydrophobic.

In one embodiment, the particulate solids may be coated with certain resin compositions or tackifying agents so as to provide a hydrophobic coating on their surfaces as explained in more detail below. In another embodiment, the hydrophobic surface coating may comprise the reaction products of a compound having a chlorosilyl group and an alkylsilane. The hydrophobic coatings may be formed by forming a silicon oxide layer or hybrid organo-silicon oxide anchor layer from a humidified reaction product of silicon tetrachloride or trichloromethysilane, followed by the vapor-deposition of a chloroalkylsilane.

In another embodiment, the hydrophobic coating agent may comprise polymers of a fluoroalkyl-group containing silane compound, and the polymers may include at least dimers and trimers of the silane compound. This hydrophobic coating agent may be made by preparing a hydrophobic solution, the solution being produced by subjecting a fluoroalkyl-group contained silane compound to a hydrolysis and a condensation polymerisation to produce at least dimers and trimers of the silane compound, coating the hydrophobic solution onto the surface of the particulate solids, and heating the particulate solids to cause the fluoroalkyl group in the solution to be bonded to the surface of the particulate solids so as to form the hydrophobic film on the particulate solids.

In another embodiment, the hydrophobic coating agent may comprise lecithin. Lecithin is particularly suitable for this purpose, because it creates a monomolecular film and is hydrophobic. Lecithin is a phosphorus-containing liquid, that is, a phosphatide found in all living organisms, both plant and animal. It consists of glycerol combined with two fatty acid radicals, phosphoric acid and choline. Hence, there may be many lecithin or phosphatidylcholines depending on the nature and disposition of the fatty acid groups. The term "lecithin" as used herein includes natural, synthetic, and modified lecithins, and it may be chemically or enzymatically modified. For more information on lecithin and its many variants, please see the KIRK-OTHMER ENCYCLOPEDIA OF CHEMICAL TECHNOLOGY, 4th ed. Volume 15, pages 192-210, John Wiley & Sons, 1995. Lecithins Sources, Manufacture & Uses, by Bernard F. Szuhaj, AMERICAN OIL CHEMISTS SOCIETY, 1985 and Lecithins, by Bernard F. Szuhaj and Gary R. List, AMERICAN OIL CHEMISTS SOCIETY, 1985.

In yet another embodiment, the hydrophobic coating agent may comprise a polyamide. Without being limited to a particular molecular weight range, in certain embodiments, the hydrophobic coating agent may include polyamides having molecular weights from about 10,000 to about 200,000.

Other hydrophobic coating agents are described in U.S. Patent Nos. 5,249,627 issued to Harms et al. and 6,660,693 issued to Miller et al*.* .

In certain preferred embodiments, the hydrophobic coating agent may comprise a polyamide, isopropyl alcohol, and a cocodiamene surfactant.

### C. Surfactants That May Be Optionally Included in the Hydrophobic Coating Agents of the Present Invention

In certain embodiments, the hydrophobic coating agent may optionally further comprise a surfactant. Any surfactant may be used that enhances the coating of the hydrophobic coating agent onto the surface of the particulates. The surfactants may aid in the dispersibility of the hydrophobic coating agent so as to increase the portion of particulates thereby coated and so as to enhance the ability of the hydrophobic coating agent to adhere to the surface of the particulates.

The selection of an appropriate surfactant to enhance the coating of the particulate surfaces may depend on, among other factors, the type of particulates used, the composition of fluids resident in the subterranean formation, and the conditions of the subterranean formation, such as formation temperature. In certain embodiments, for example, suitable surfactants may comprise long-chain alkyl sulfates wherein the alkyl chain comprises from about 6 carbon atoms to about 21 carbon atoms. An example of one suitable long-chain alkyl sulfate is lauryl sulfate. Other suitable surfactants may comprise one or more degradable surfactants, wherein the surfactant molecules are derived from degradable polymers and contain a backbone with repeating units of degradable groups, such as esters or other derivatives, for example, such as polycarbonates, polyacetals, poly(orthoesters), or polyesteramides as the degradable hydrophobic block or tail in the surfactant molecule attached to the hydrophilic polymeric block or head group. Other suitable surfactants may include reactive surfactants, such as non-migratory surfactants or "surfmers," which comprise surfactants that carry one or more polymerizable functional groups. Examples of reactive surfactants suitable for use in the present invention are described in U.S. Patent Application Publication Number 2005/0070679, filed August 30, 2004 . The surfactant may be present in a treatment fluid utilized in the present invention in any amount that does not adversely affect the properties of the particulates. In certain embodiments, the surfactant may be present in an amount in the range of from about 0.01% to about10% by volume of a treatment fluid comprising the particulates being treated. In certain embodiments, the surfactant may be present in an amount in the range of from about 0.1% to about 2% by volume of a treatment fluid comprising the particulates being treated.

### II. Carrier Fluids Suitabte for Use in the Present Invention

A carrier fluid may be used to introduce the particulates into the subterranean formation, including fracturing carrier fluids. Any carrier fluid that achieves the desired viscosity effect for carrying and depositing the particulates in the subterranean formation is suitable for use in -the present invention. Carrier fluids include any of the fracturing fluids commonly known in the art such as, for example, fracturing fluids comprising a liquid and a gelling agent.

### III. Methods Generally and Coating Techniques

One embodiment of the present invention provides a method of enhancing the recovery of an aqueous fluid from a subterranean formation comprising: providing a plurality of particulates; coating the plurality of particulates with a hydrophobic coating agent so as to form a plurality of hydrophobically-coated particulates; providing a carrier fluid; mixing the plurality of hydrophobically-coated particulates with the carrier fluid so as to form a pumpable slurry; introducing the plurality of hydrophobically-watedparticulates into the subterranean formation; placing the plurality of bydrophobically-coated particulates in the subterranean formation; and allowing a treatment fluid to flow back through the plurality of hydrophobically-coated particulates to recover a treatment fluid that was previously-introduced into the subterranean formation.

Another embodiment of the present invention provides a method of recovering a previously-introduced aqueous treatment fluid from a subterranean formation comprising: providing a plurality of particulates; introducing the plurality of particulates into a subterranean well bore; introducing a hydrophobic coating agent into the subterranean well bore; allowing the hydrophobic coating agent to coat the plurality of particulates so as to form a plurality of hydrophobically-coated particulates; allowing the plurality of hydrophobically-coated particulates to be placed in a portion of the subterranean formation; and allowing the previously-introduced aqueous treatment fluid to flow back through the plurality of hydrophobically-coated particulates.

Another embodiment of the present invention provides method of enhancing the recovery of an aqueous treatment fluid from a subterranean formation comprising: providing a plurality of hydrophobically-coated particulates; placing the plurality of hydrophobically-coated particulates in the subterranean formation; and allowing a treatment fluid to flow back through the plurality of hydrophobically-coated particulates to recover a treatment fluid that was previously-introduced into the subterranean formation.

In practicing certain embodiments of the present invention, the coating process of the plurality of particulates may be by any method known in the art. This coating may be accomplished in treatments performed prior to transporting the particulates to a job site, or in a treatment performed "on-the-fly." The term "on-the-fly" is used herein to mean that one flowing stream comprising particulates is continuously introduced into another flowing stream comprising the hydrophobic coating agent so that the streams are combined and mixed while continuing to flow as a single stream as part of the on-going treatment at the job site. Such mixing can also be described as "real-time" mixing. One such on-the-fly mixing method would involve continuously conveying the particulates and the hydrophobic coating agent to a mixing vessel, for example, using a sand screw. Once inside the mixing vessel, the particulates would be contacted with the hydrophobic coating agent and continuously removed from the mixing vessel. In that situation, the sand screw could be used both to aid in mixing the particulates, be they gravel, proppant, or some other particulates, with the hydrophobic coating agent and to remove the hydrophobic coating agent from the mixing tank. As is well understood by those skilled in the art, batch or partial batch mixing may also be used to accomplish such coating at a well site just prior to introducing the particulates into a subterranean formation.

In certain exemplary embodiments, the hydrophobic coating may remain on the particulates until the load recovery of the aqueous treatment fluid has been completed. The hydrophobic coating may remain on the particulates until after the completion of the load recovery to provide continued enhanced recovery, but in certain preferred embodiments, the coating will remain on the particulates at least until the completion of the load recovery process.

### IV. Exemplary Resins and Tackifying Agents

In addition to the hydrophobic coating agents enumerated above, suitable hydrophobic coating agents may include any suitable resin composition or tackifying agent that results in a hydrophobic coating on the surface area of the treated particulates as discussed in this section.

### A. Suitable Resins

Resins suitable for use in the consolidation fluids of the present invention include all resins known in the art that are capable of forming a hardened, consolidated mass.

In some embodiments, the hydrophobic coating agent may comprise a resin. Resins suitable for use in the present invention include all resins known and used in the art. Certain resins suitable for use in the present invention may be capable of increasing the water contact angle of a surface by at least about 20 degrees.

One resin-type coating material suitable for use in the methods of the present invention is a two-component epoxy based resin comprising a hardenable resin component and a hardening agent component. The hardenable resin component is comprised of a hardenable resin and an optional solvent. The solvent may be added to the resin to reduce its viscosity for ease of handling, mixing and transferring. Factors that may affect the decision to include a solvent include geographic location of the well and the surrounding weather conditions. An alternate way to reduce the viscosity of the liquid hardenable resin is to heat it. This method avoids the use of a solvent altogether, which may be desirable in certain circumstances. The second component is the liquid hardening agent component, which is comprised of a hardening agent, a silane coupling agent, a surfactant, an optional hydrolyzable ester for, among other things, breaking gelled fracturing fluid films on the proppant particles, and an optional liquid carrier fluid for, among other things, reducing the viscosity of the liquid hardening agent component.

Examples of hardenable resins that can be used in the hardenable resin component include, but are not limited to, organic resins such as bisphenol A-diglycidyl ether resins, butoxymethyl butyl glycidyl ether resins, bisphenol A-epichlorohydrin resins, polyepoxide resins, novolak resins, polyester resins, phenol-aldehyde resins, urea-aldehyde resins, furan resins, urethane resins, glycidyl ether resins, and combinations thereof. The hardenable resin used may be included in the hardenable resin component in an amount in the range of from about 60% to about 100% by weight of the hardenable resin component. In some embodiments, the hardenable resin used may be included in the hardenable resin component in an amount of about 70% to about 90% by weight of the hardenable resin component.

Any solvent that is compatible with the hardenable resin and achieves the desired viscosity effect is suitable for use in the hardenable resin component in certain embodiments of the present invention. Some preferred solvents are those having high flash points (*e.g*., about 125°F) (52°C) because of, among other things, environmental and safety concerns; such solvents include butyl lactate, butylglycidyl other, dipropylene glycol methyl ether, dipropylene glycol dimethyl ether, dimethyl formamide, diethyleneglycol methyl ether, ethyleneglycol butyl ether, diethyleneglycol butyl ether, propylene carbonate, methanol, butyl alcohol, d'limonene, fatty acid methyl esters, and combinations thereof. Other preferred solvents include aqueous dissolvable solvents such as, methanol, isopropanol, butanol, glycol ether solvents, and combinations thereof. Suitable glycol ether solvents include, but are not limited to, diethylene glycol methyl ether, dipropylene glycol methyl ether, 2-butoxy ethanol, ethers of a C₂ to C₆ dihydric alkanol having at least one C₁ to C₆ alkyl group, mono ethers of dihydric alkanols, methoxypropanol, butoxyethanol, hexoxyethanol, and isomers thereof. Aqueous solvents also may be used in the methods of the present invention. In certain embodiments wherein an aqueous solvent is used, certain additives may be used, among other purposes, to aid in dispersing the resin in the aqueous solution. Selection of an appropriate solvent is dependent on, *inter alia,* the resin composition chosen,

As described above, use of a solvent in the hardenable resin component is optional but may be desirable to reduce the viscosity of the hardenable resin component for ease of handling, mixing, and transferring. In some embodiments, the amount of the solvent used in the hardenable resin component is in the range of from about 0.1% to about 30% by weight of the hardenable resin component. Optionally, the hardenable resin component may be heated to reduce its viscosity, in place of, or in addition to, using a solvent.

Examples of the hardening agents that can be used in the liquid hardening agent component in certain embodiments of the present invention include, but are not limited to, piperazine, derivatives of piperazine (*e.g*., aminoethylpiperazine), 2*H*-pyrrole, pyrrole, imidazole, pyrazole, pyridine, pyrazine, pyrimidine, pyridazine, indolizine, isoindole, 3*H-*indole, indole, 1*H*-indazole, purine, 4*H*-quinolizine, quinoline, isoquinoline, phthalazine, naphthyridine, quinoxaline, quinazoline, 4*H*-carbazole, carbazole, β-carboline, phenanthridme, acridine, phenathroline, phenazine, imidazolidine, phenoxazine; cinnoline, pyrrolidine, pyrroline, imidazoline, piperidine, indoline, isoindoline, quinnolindine, morpholine, azocine, azepine, 2*H*-azepine, 1,3,5-triazine, thiazole, pteridine, dihydroquinoline, hexa ethylene imine, indazole, amines, aromatic amines, polyamines, aliphatic amines, cyclo-aliphatic amines, amides, polyamides, 2-ethyl-4-methyl imidazole, 1,1,3-trichlorotrifluoroacetone, and combinations thereof. The chosen hardening agent often effects the range of temperatues over which a hardenable resin is able to cure. By way of example and not of limitation, in subterranean formations having a temperature from about 60°F (16°C) to about 250°F (121°C) amines and cyclo--aliphatic amines such as piperidine, triethylamine, N,N-dimethylaminopyridine, benzyldimethylamine, tris(dimethylaminomethyl) phenol, and 2-(N₂N-dimethylaminomethyl)phenol may be used. In subterranean formations having higher temperatures, 4,4'-diaminodiphenyl sulfone may be a suitable hardening agent. Hardening agents that comprise piperazine or a derivative of piperazine have been shown capable of curing various hardenable resins from temperatures as low as about 70°F (21°C) to as high as about 350°F (177°C). The hardening agent used may be included in the liquid hardening agent component in an amount sufficient to consolidate the coated particulates. In some embodiments of the present invention, the hardening agent used may be included in the liquid hardenable resin component in the range of from about 40% to about 60% by weight of the liquid hardening agent component. In some embodiments, the hardenable resin used may be included in the hardenable resin component in an amount of about 45% to about 55% by weight of the liquid hardening agent component.

The silane coupling agent may be used, among other things, to act as a mediator to help bond the resin to formation particulates and/or proppant. Examples of suitable silane coupling agents include, but are not limited to, N-β-(aminoethyl)-γ-aminopropyl trimethoxysilane, N-2-(amioethyl)-3-aminopropyltrimethoxysilane, 3-glycidoxypropyltrimethoxysilane, and combinations thereof. The silane coupling agent used may be included in the liquid hardening agent component in an amount capable of sufficiently bonding the resin to the mineral surface. In some embodiments of the present invention, the silane coupling agent used may be included in the liquid hardenable resin component in the range of from about 0.1% to about 3% by weight of the liquid hardening agent component.

Any surfactant compatible with the hardening agent and capable of facilitating the contacting of the resin onto mineral surfaces of the particulates may be used in the hardening agent component in certain embodiments of the present invention. Such surfactants include, but are not limited to, an alkyl phosphonate surfactant (*e.g.*, a C₁₂-C₂₂ alkyl phosphonate surfactant), an ethoxylated nonyl phenol phosphate ester, one or more cationic surfactants, and one or more nonionic surfactants. Mixtures of one or more cationic and nonionic surfactants also may be suitable. Examples of such surfactant mixtures are described in U.S. Patent No. 6,311,773 issued to Todd et al. on November 6, 2001 . The surfactant or surfactants used may be included in the liquid hardening agent component in an amount in the range of from about 1% to about 10% by weight of the liquid hardening agent component.

While not required, examples of hydrolysable esters that can be used in the hardening agent component in certain embodiments of the present invention include, but are not limited to, a mixture of dimethylglutarate, dimethyladipate, dimethylsuccinate, sorbitol, catechol, dimethylthiolate, methyl salicylate, dimethyl salicylate, dimethylsuccinate, terbutylhydroperoxide, and combinations thereof. When used, a hydrolyzable ester may be included in the hardening agent component in an amount in the range of from about 0.1% to about 3% by weight of the hardening agent component. In some embodiments a hydrolysable ester is included in the hardening agent component in an amount in the range of from about 1% to about 2.5% by weight of the hardening agent component.

Use of a diluent or liquid carrier fluid in the hardenable resin composition is optional and may be used to reduce the viscosity of the hardenable resin component for ease of handling, mixing and transferring. Any suitable carrier fluid that is compatible with the hardenable resin and achieves the desired viscosity effects is suitable for use in the present invention. Some suitable liquid carrier fluids are those having high flash points (*e.g*., about 125°F) (52°C) because of, among other things, environmental and safety concerns; such solvents include, but are not limited to, butyl lactate, butylglycidyl ether, dipropylene glycol methyl ether, dipropylene glycol dimethyl ether, dimethyl formamide, diethyleneglycol-methyl ether, ethyleneglycol butyl ether, diethyleneglycol butyl ether, propylene carbonate, methanol, butyl alcohol, d'limonene, fatty acid methyl esters, and combinations thereof. Other suitable liquid carrier fluids include aqueous dissolvable solvents such as, for example, methanol, isopropanol, butanol, glycol ether solvents, and combinations thereof. Suitable glycol ether liquid carrier fluids include, but are not limited to, diethylene, glycol methyl ether, dipropylene glycol methyl ether, 2-butoxy ethanol, ethers of a C₂ to C₆ dihydric alkanol having at least one C₁ to C₆ alkyl group, mono ethers of dihydric alkanols, methoxypropanol, butoxyethanol, hexoxyethanol, and isomers thereof. Selection of an appropriate liquid carrier fluid is dependent on, *inter alia,* the resin composition chosen.

Another resin suitable for use in the methods of the present invention are furan-based resins. Suitable furan-based resins include, but are not limited to, furfuryl alcohol resins, aldehydes, and a mixture of furan resins and phenolic resins. A furan-based resin may be combined with a solvent to control viscosity if desired. Suitable solvents for use with furan-based resins include, but are not limited to, 2-butoxy ethanol, butyl lactate, butyl acetate, tetrahydrofurfuryl methacrylate, tetrahydrofurfuryl acrylate, esters of oxalic, maleic and succinic acids, and furfuryl acetate.

Another resin suitable for use in the methods of the present invention is a phenolic-based resin. Suitable phenolic-based resins include, but are not limited to, terpolymers of phenol, phenolic formaldehyde resins, and a mixture of phenolic and furan resins. A phenolic-based resin may be combined with a solvent to control viscosity if desired. Suitable solvents for use in the phenolic-based consolidation fluids of the present invention include, but are not limited to butyl acetate, butyl lactate, furfuryl acetate, and 2-butoxy ethanol.

Another resin suitable for use in the methods of the present invention is an HT epoxy-based resin. Suitable HT epoxy-based components include, but are not limited to, bisphenol A-epichlorohydrin resins, polyepoxide resins, novolac resins, polyester resins, glycidyl ethers and mixtures thereof. An HT epoxy-based resin may be combined with a solvent to control viscosity if desired. Suitable solvents for use with the HT epoxy-based resins of the present invention are those solvents capable of substantially dissolving the HT epoxy-resin chosen for use in the consolidation fluid. Such solvents include, but are not limited to, dimethyl sulfoxide and dimethyl formamide. A co-solvent such as a dipropylene glycol methyl ether, dipropylene glycol dimethyl ether, dimethyl formamide, diethylene glycol methyl ether, ethylene glycol butyl ether, diethylene glycol butyl ether, propylene carbonate, d'limonene and fatty acid methyl esters, may also be used in combination with the solvent.

Another resin-type coating material suitable for use in the methods of the present invention is a phenol/phenol formaldehyde/furfuryl alcohol resin comprising from about 5% to about 30% phenol, from about 40% to about 70% phenol formaldehyde, from about 10% to about 40% furfuryl alcohol, from about 0.1% to about 3% of a silane coupling agent, and from about 1% to about 15% of a surfactant. In the phenol/phenol formaldehyde/furfuryl alcohol resins suitable for use in the methods of the present invention, suitable silane coupling agents include, but are not limited to, N-2-(ammoethyl)-3-aminopropyltrimethoxysilane, 3-glycidoxypropyltrimethoxysilane, and n-β-(aminoethyl)-γ-aminopropyl trimethoxysilane. Suitable surfactants include, but are not limited to, an ethoxylated nonyl phenol phosphate ester, mixtures of one or more cationic surfactants, and one or more non-ionic surfactants and an alkyl phosphonate surfactant.

In certain embodiments, the resin may be present in an amount in the range of from about 0.003 pounds (1·36 grams) to about 0.5 pounds (226·8 grams) per square foot (929 square centimetres) of surface area of mineral surface treated on the particulates. In certain embodiments, the resin may be present in an amount in the range of from about 0.03 pounds (13·6 grams) to about 0.12 pounds (54·4 grams) per square foot (929 square centimetres) of surface area of the treated particulates.

### B. Suitable Tackifying Agents

Tackifying agents suitable for use in the methods of the present invention exhibit a sticky character and, thus, impart a degree of consolidation to unconsolidated or weakly consolidated particulates in the subterranean formation. As used herein, a "tackifying agent" refers to a composition having a nature such that it is (or may be activated to become) somewhat sticky to the touch. Examples of suitable tackifying agents suitable for use in the present invention include non-aqueous tackifying agents; aqueous tackifying agents; and silyl-modified polyamides.

Tackifying agents suitable for use in the present invention include non-aqueous tackifying agents, aqueous tackifying agents, and silyl-modified polyamides. Certain such tackifying agents suitable for use in the present invention may be capable of increasing the water contact angle of a surface by at least about 20 degrees. One group of non-aqueous tackifying agents suitable for use in the present invention comprises polyamides that are liquids or in solution at the temperature of the particulates such that they are, by themselves, non-hardening when placed in contact with the particulates. An example of one such tackifying agent is a condensation reaction product comprised of commercially available polyacids and a polyamine. Such commercial products include compounds such as mixtures of C₃₆ dibasic acids containing some trimer and higher oligomers and also small amounts of monomer acids that are reacted with polyamides. Other polyacids include trimer acids, synthetic acids produced from fatty acids, maleic anhydride, acrylic acid, and the like. Such acid compounds are commercially available from companies such as Witco Corporation, Union Camp, Chemtall, and Emery Industries. The reaction products are available from, for example, Champion Technologies, Inc. and Witco Corporation. In certain embodiments, a non-aqueous tackifying agent may comprise an isopropyl alcohol solution of about 3% polyamides by volume of the solution. Additional compounds which may be used as non-aqueous tackifying compounds include liquids and solutions of, for example, polyesters, polycarbonates, polycarbamates, natural resins such as shellac, and the like. Other suitable non-aqueous tackifying agents are described in U.S. Patent Number 5,853,048 issued to Weaver et al.*,* U.S. Patent Number 5,833,000 issued to Weaver et al.*,* U.S. Patent Number 5,582,249 issued to Weaver et al., U.S. Patent Number 5,775,425 issued to Weaver et al.*,* and U.S. Patent Number 5,787,986 issued to Weaver et al. In certain embodiments, the non-aqueous tackifying agent may be present in an amount in the range of from about 0.003 pounds (1·36 grams) to about 0.5 pounds (226·8 grams) per square foot (929 square centimetres) of surface area of mineral surface treated on the particulates. In certain embodiments, the non-aqueous tackifying agent may be present in an amount in the range of from about 0.03 pounds (13·6 grams) to about 0.12 pounds (54·4 grams) per square foot (929 square centimetres) of surface area of mineral surface treated on the particulates.

Non-aqueous tackifying agents suitable for use in the present invention may be either used such that they form a non-hardening coating, or they may be combined with a multifunctional material capable of reacting with the non-aqueous tackifying agent to form a hardened coating. A "hardened coating," as used herein, means that the reaction of the tackifying compound with the multifunctional material will result in a substantially non-flowable reaction product that exhibits a higher compressive strength in a consolidated agglomerate than the tackifying compound alone with the particulates. In this instance, the non-aqueous tackifying agent may function similarly to a hardenable resin. Multifunctional materials suitable for use in the present invention include, but are not limited to, aldehydes such as formaldehyde, dialdehydes such as glutaraldehyde, hemiacetals or aldehyde releasing compounds, diacid halides, dihalides such as dichlorides and dibromides, polyacid anhydrides such as citric acid, epoxides, furfuraldehyde, glutaraldehyde or aldehyde condensates and the like, and combinations thereof. In some embodiments of the present invention, the multifunctional material may be mixed with the tackifying compound in an amount of from about 0.01% to about 50% by weight of the tackifying compound to effect formation of the reaction product. In some preferable embodiments, the compound is present in an amount of from about 0.5% to about 1% by weight of the tackifying compound. Suitable multifunctional materials are described in U.S. Patent Number 5,839,510 issued to Weaver et al.

Solvents suitable for use with the non-aqueous tackifying agents of the present invention include any solvent that is compatible with the non-aqueous tackifying agent and achieves the desired viscosity effect. The solvents that can be used in the present invention preferably include those having high flash points (most preferably above about 125°F)(52°). Examples of solvents suitable for use in the present invention include, but are not limited to, butylglycidyl ether, dipropylene glycol methyl ether, butyl bottom alcohol, dipropylene glycol dimethyl ether, diethyleneglycol methyl ether, ethyleneglycol butyl ether, methanol, butyl alcohol, isopropyl alcohol, diethyleneglycol butyl ether, propylene carbonate, d'limonene, 2-butoxy ethanol, butyl acetate, furfuryl acetate, butyl lactate, dimethyl sulfoxide, dimethyl formamide, fatty acid methyl esters, and combinations thereof.

Aqueous tackifying agents suitable for use in the present invention are not significantly tacky when placed onto a mineral surface, but are capable of being "activated" (that is destabilized, coalesced and/or reacted) to transform the compound into a sticky, tackifying compound at a desirable time. In some embodiments, a pretreatment may be first contacted with the mineral surface to prepare it to be coated with an aqueous tackifying agent. Suitable aqueous tackifying agents are generally charged polymers that comprise compounds that, when in an aqueous solvent or solution, will form a non-hardening coating (by itself or with an activator) and, when placed on a particulate, will increase the continuous critical resuspension velocity of the particulate when contacted by a stream of water. The aqueous tackifying agent may, *inter alia*, enhance the grain-to-grain contact between individual particulates (be they proppant particulates, formation fines, or other particulates) and/or to help bring about the consolidation of the particulates into a cohesive, flexible, and permeable mass. In certain embodiments, the aqueous tackifying agent may be present in an amount in the range of from about 0.003 pounds (1·36 grams) to about 0.5 pounds (226·8 grams) per square foot (929 square cm) of surface area of mineral surface treated on the particulates. In certain embodiments, the aqueous tackifying agent may be present in an amount in the range of from about 0.03 pounds to (13·6 grams) to about 0.12 pounds (54·4 grams) per square foot (929 square cm) of surface area of mineral surface treated on the particulates.

Examples of aqueous tackifying agents suitable for use in the present invention include, but are not limited to, acrylic acid polymers, acrylic acid ester polymers, acrylic acid derivative polymers, acrylic acid homopolymers, acrylic acid ester homopolymers (such as poly(methyl acrylate), poly (butyl acrylate), and poly(2-ethylhexyl acrylate)), acrylic acid ester co-polymers, methacrylic acid derivative polymers, methacrylic acid homopolymers, methacrylic acid ester homopolymers (such as poly(methyl methacrylate), poly(butyl methacrylate), and poly(2-ethylhexyl methacryate)), acrylamido-methyl-propane sulfonate polymers, acrylamido-methyl-propane sulfonate derivative polymers, acrylamido-methyl-propane sulfonate co-polymers, and acrylic acid/acrylamido-methyl-propane sulfonate co-polymers, and combinations thereof. Methods of determining suitable aqueous tackifying agents and additional disclosure on aqueous tackifying agents may be found in U.S. Patent Application Number 10/864,061, filed June 9, 2004, and U.S. Patent Application Number 10/864,618, filed June 9, 2004.

Silyl-modified polyamide compounds suitable for use as a surface-treating reagent in the methods of the present invention may be described as substantially self-hardening compositions that are capable of at least partially adhering to surfaces in the unhardened state, and that are further capable of self-hardening themselves to a substantially non-tacky state to which individual particulates will not adhere to, for example, in formation or proppant pack pore throats. Such silyl-modified polyamides may be based, for example, on the reaction product of a silating compound with a polyamide or a mixture of polyamides. The polyamide or mixture of polyamides may be one or more polyamide intermediate compounds obtained, for example, from the reaction of a polyacid (*e.g*., diacid or higher) with a polyamine (*e.g*., diamine or higher) to form a polyamide polymer with the elimination of water. Other suitable silyl-modified polyamides and methods of making such compounds are described in U.S. Patent Number 6,439,309 issued to Matherly et al. In certain embodiments, the silyl-modified polyamide compound may be present in an amount in the range of from about 0.003 pounds (1·36 grams) to about 0.5 pounds (226·8 grams) per square foot (929 square cm) of surface area of mineral surface treated on the particulates. In certain embodiments, the silyl-modified polyamide compound may be present in an amount in the range of from about 0.03 pounds (13·6 grams) to about 0.12 pounds (54·4 grams) per square foot (929 square cm) of surface area of the treated particulates.

To facilitate a better understanding of the present invention, the following examples of certain aspects of some embodiments are given. In no way should the following examples be read to limit, or define, the scope of the invention

### EXAMPLES

30/70 mesh Brady sand was coated with a low molecular weight polyamide solution and placed in a column pack. Water was used as a simulated production fluid to compare the permeability of coated proppant packs versus uncoated proppant packs. Laboratory results from the column flow tests show that the hydrophobic coated proppant packs have higher permeability to water as compared to the uncoated packs as shown in Figure 1. Table 1 shows the permeability data that is depicted in Figure 1. The data shows that increasing the amount of hydrophobic coating on the particulates results in a higher permeability of the column and thus demonstrates that hydrophobic coated particulates may enhance the recovery of aqueous treatment fluids.

**TABLE 1: COLUMN PERMEABILITY OF PROPPANT PACKS VERSUS AMOUNT OF HYDROPHOBIC COATING**

| **Pore Volume** | **Column Permeability (Darcies)** | | |
|---|---|---|---|
| | **0% Hydrophobic Coating Agent** | **0.5% Hydrophobic Coating Agent** | **1.0% Hydrophobic Coating Agent** |
| 5.4 | 120.6 | 127.5 | 188.6 |
| 7.2 | 120.6 | 128.1 | 191.1 |
| 9.1 | 120.9 | 128.7 | 193.2 |
| 10.8 | 120.5 | 129.4 | 194.8 |
| 12.7 | 121.1 | 130.0 | 196.2 |
| 14.5 | 121.3 | 130.6 | 197.5 |
| 16.3 | 122.1 | 131.2 | 198.6 |
| 18.1 | 121.6 | 131.8 | 199.5 |
| 36.3 | 121.6 | 137.2 | 206.1 |
| 54.4 | 121.8 | 141.6 | 210.1 |
| 72.5 | 122.0 | 145.1 | 213.0 |
| 90.7 | 120.4 | 147.7 | 215.2 |
| 108.9 | 122.1 | 149.4 | 217.1 |
| 126.9 | 122.1 | 150.1 | 218.6 |
| 145.0 | 122.2 | 149.9 | 220.0 |
| 163.2 | 122.8 | 148.9 | 221.2 |
| 181.3 | 122.9 | 149.9 | 222.3 |

Therefore, the present invention is well adapted to attain the ends and advantages mentioned as well as those that are inherent therein. The terms in the claims have their plain, ordinary meaning unless otherwise explicitly and clearly defined by the patentee.

## Claims

1. A method of enhancing the recovery of an aqueous treatment fluid from a subterranean formation comprising:
providing a plurality of hydrophobically-coated particulates;
placing the plurality of hydrophobically-coated particulates in the subterranean formation; and
allowing a Treatment fluid to flow back through the plurality of hydrophobically-coated particulates to recover a treatment fluid that was previously- introduced into the subterranean formation.

2. The method of claim 1 additionally comprising
providing a plurality of particulates;
coating the plurality of particulates with a hydrophobic coating agent so as to form said plurality of hydophobically-coated particulates;
providing a carrier fluid;
mixing the plurality of hydraphobically-coated particulates with the carrier fluid so as to form a pumpable slurry; and
placing the pumpable slurry comprising the plurality of of hydrophobically coated particulates in the subterranean formation.

3. The method of claim 2 wherein the hydrophobic coating agent comprises a polyamide.

4. The method of claim 2 wherein the hydrophobic coating agent is a polycarbonate, a polycarbamate, or a natural resin.

5. The method of claim 2 wherein the hydrophobic coating agent comprises a reaction product of a compound having a chlorosilyl group and an alkysilane.

6. The method of claim 2 wherein the hydrophobic coating agent comprises a polymer of a silane compound having a fluoroalkyl-group.

7. The method of claim 2 wherein the hydrophobic coating agent is a silicon- oxide layer, a hybrid organo-silicon oxide anchor layer, or a mixture thereof.

8. The method of claim 7 further comprising coating a chloroalkypsilane by vapor-deposition on the surface of the hydrophobically-coated particulates

9. The method of claim 2 wherein the hydrophobic coating agent comprises a polymer of a fluoroalkyl-group containing silane compound.

10. The method of claim 2 wherein the hydrophobic coating agent comprises lecithin.

11. The method of claim 4 wherein the coating of the plurality of particulates occurs before the mixing of the plurality of hydrophobically-coated particulates with the carrier fluid.

12. The method of claim 2 wherein the hydrophobic coating agent comprises a polyamide, a solvent, and a surfactant.

13. The method of claim 12 wherein the surfactant is lauryl sulfate, a polycarbonate, a polyacetal, a poly(orthoester), a polyesteramide, or an alkyl sulfate having an alkyl chain from 6 carbon atoms to 21 carbon atoms.

14. The method of claim 12 wherein the solvent comprises isopropyl alcohol.

15. The method of claim 12 wherein the surfactant comprises cocodiamine.

16. The method of claim 15 wherein the solvent comprises isopropyl alcohol.

## Patentansprüche

1. Verfahren zur Verbesserung der Rückgewinnung eines wässrigen Behandlungsfluids aus einer unterirdischen Formation, umfassend:
Bereitstellen einer Vielzahl hydrophob beschichteter Partikel, Anordnen der Vielzahl hydrophob beschichteter Partikel in der unterirdischen Formation, und
Zulassen des Zurückströmens eines Behandlungsfluids durch die Vielzahl hydrophob beschichteter Partikel zur Rückgewinnung eines Behandlungsfluids, welches zuvor in die unterirdische Formation eingeführt wurde.

2. Verfahren nach Anspruch 1, zusätzlich umfassend:
Bereitstellen einer Vielzahl von Partikel,
Beschichten der Vielzahl von Partikel mit einem hydrophoben Beschichtungsmittel, um die Vielzahl hydrophob beschichteter Partikel zu bilden, Bereitstellen eines Trägerfluids,
Mischen der Vielzahl hydrophob beschichteter Partikel mit dem Trägerfluid, um einen pumpbaren Schlamm zu bilden, und
Anordnen des pumpbaren Schlamms, umfassend die Vielzahl hydrophob beschichteter Partikel, in der unterirdischen Formation.

3. Verfahren nach Anspruch 2, wobei das hydrophobe Beschichtungsmittel ein Polyamid umfasst.

4. Verfahren nach Anspruch 2, wobei das hydrophobe Beschichtungsmittel ein Polycarbonat, ein Polycarbamat oder ein natürlicher Harz ist.

5. Verfahren nach Anspruch 2, wobei das hydrophobe Beschichtungsmittel ein Reaktionsprodukt aus einer Verbindung mit einer Chlorosilyl-Gruppe und einem Alkylsilan umfasst.

6. Verfahren nach Anspruch 2, wobei das hydrophobe Beschichtungsmittel ein Polymer von einer Silanverbindung mit einer Fluoroalkyl-Gruppe umfasst.

7. Verfahren nach Anspruch 2, wobei das hydrophobe Beschichtungsmittel eine Siliciumoxid-Schicht, eine Hybrid-Organo-Siliziumoxidankerschicht oder eine Mischung von diesen ist.

8. Verfahren nach Anspruch 7, des Weiteren umfassend ein Auftragen eines Chloroalkylsilans auf die Oberfläche der hydrophob beschichteten Partikel durch Aufdampfen.

9. Verfahren nach Anspruch 2, wobei das hydrophobe Beschichtungsmittel ein Polymer von einer, eine Fluoroalkyl-Gruppe enthaltende Silanverbindung umfasst.

10. Verfahren nach Anspruch 2, wobei das hydrophobe Beschichtungsmittel Lecithin umfasst.

11. Verfahren nach Anspruch 4, wobei das Beschichten der Vielzahl von Partikel vor dem Mischen der Vielzahl hydrophob beschichteter Partikel mit dem Trägerfluid erfolgt.

12. Verfahren nach Anspruch 2, wobei das hydrophobe Beschichtungsmittel ein Polyamid, ein Lösungsmittel und ein Tensid umfasst.

13. Verfahren nach Anspruch 12, wobei das Tensid Laurylsulfat , ein Polycarbonat, ein Polyacetal, ein Poly(Orthoester), ein Polyesteramid oder ein Alkylsulfat mit einer Alkyl-Kette von 6 Kohlenstoffatomen bis 21 Kohlenstoffatomen ist.

14. Verfahren nach Anspruch 12, wobei das Lösungsmittel Isopropylalkohol umfasst.

15. Verfahren nach Anspruch 12, wobei das Tensid Cocodiamin umfasst.

16. Verfahren nach Anspruch 15, wobei Lösungsmittel Isopropylalkohol umfasst.

## Revendications

1. Procédé d'amélioration de la récupération d'un fluide de traitement aqueux à partir d'une formation souterraine, comprenant :
la fourniture d'une pluralité de particules revêtues de façon hydrophobe ;
le placement de la pluralité de particules revêtues de façon hydrophobe dans la formation souterraine; et
le retour d'un fluide de traitement par écoulement à travers la pluralité de particules revêtues de façon hydrophobe pour récupérer un fluide de traitement qui a été introduit auparavant dans la formation souterraine.

2. Procédé selon la revendication 1, comprenant en outre
la fourniture d'une pluralité de particules;
le revêtement de la pluralité de particules avec un agent de revêtement hydrophobe de façon à former ladite pluralité de particules revêtues de façon hydrophobe;
la fourniture d'un fluide porteur;
le mélange de la pluralité de particules revêtues de façon hydrophobe avec le fluide porteur de façon à former une suspension pompable; et
le placement de la suspension pompable comprenant la pluralité de particules revêtues de façon hydrophobe dans la formation souterraine.

3. Procédé selon la revendication 2, dans lequel l'agent de revêtement hydrophobe comprend un polyamide.

4. Procédé selon la revendication 2, dans lequel l'agent de revêtement hydrophobe est un polycarbonate, un polycarbamate ou une résine naturelle.

5. Procédé selon la revendication 2, dans lequel l'agent de revêtement hydrophobe comprend un produit réactionnel d'un composé ayant un groupe chlorosilyle et un alkylsilane.

6. Procédé selon la revendication 2, dans lequel l'agent de revêtement hydrophobe comprend un polymère d'un composé silane ayant un groupe fluoroalkyle.

7. Procédé selon la revendication 2, dans lequel l'agent de revêtement hydrophobe est une couche d'oxyde de silicium, une couche d'ancrage d'oxyde d'organo-silicium hybride ou un mélange de ceux-ci.

8. Procédé selon la revendication 7, comprenant en outre le revêtement d'un chloroalkylsilane par dépôt en phase vapeur sur la surface des particules revêtues de façon hydrophobe.

9. Procédé selon la revendication 2, dans lequel l'agent de revêtement hydrophobe comprend un polymère d'un groupe fluoroalkyle contenant un composé silane.

10. Procédé selon la revendication 2, dans lequel l'agent de revêtement hydrophobe comprend de la lécithine.

11. Procédé selon la revendication 4, dans lequel le revêtement de la pluralité de particules s'effectue avant le mélange de la pluralité de particules revêtues de façon hydrophobe avec le fluide porteur.

12. Procédé selon la revendication 2, dans lequel l'agent de revêtement hydrophobe comprend un polyamide, un solvant et un tensioactif.

13. Procédé selon la revendication 12, dans lequel le tensioactif est le lauryl-sulfate, un polycarbonate, un polyacétal, un poly(orthoéther), un polyestéramide ou un sulfate d'alkyle ayant une chaîne alkyle comportant de 6 atomes de carbone à 21 atomes de carbone.

14. Procédé selon la revendication 12, dans lequel le solvant comprend l'alcool isopropylique.

15. Procédé selon la revendication 12, dans lequel le tensioactif comprend la cocodiamine.

16. Procédé selon la revendication 15, dans lequel le solvant comprend l'alcool isopropylique.
